Europäisches Patentamt

European Patent Office

Office européen des brevets

(11) Publication number: **0 094 432**
**B1**

## EUROPEAN PATENT SPECIFICATION

(45) Date of publication of patent specification: **05.04.89**

(21) Application number: **82903343.0**

(22) Date of filing: **19.11.82**

(86) International application number:
**PCT/JP82/00442**

(87) International publication number:
**WO 83/01841 26.05.83 Gazette 83/13**

(51) Int. Cl.⁴: **G 02 F 1/13**, G 02 F 1/137,
G 09 F 9/00

(54) **LIQUID CRYSTAL DISPLAY UNIT.**

(30) Priority: **20.11.81 JP 186334/81**

(43) Date of publication of application:
**23.11.83 Bulletin 83/47**

(45) Publication of the grant of the patent:
**05.04.89 Bulletin 89/14**

(84) Designated Contracting States:
**DE FR GB NL**

(56) References cited:
**EP-A-0 032 362
JP-A-54 058 042
US-A-4 288 822**

**SOVIET JOURNAL OF QUANTUM
ELECTRONICS, vol. 7, no. 12, December 1980,
pages 1505-1507, American Institute of
Physics, New York, US; A.N. NESRULLAEV et
al.: "Thermooptic data storage in the chiral
ferroelectric smectic C\* phase of liquid
crystals"**

**IBM Technical Disclosure Bulletin, Vol. 24, no.
3, August 1981, pages 1570 to 1571**

(73) Proprietor: **SONY CORPORATION
7-35 Kitashinagawa 6-Chome Shinagawa-ku
Tokyo 141 (JP)**

(72) Inventor: **KOJIMA, Shigeru
Sony Corporation 7-35, Kitashinagawa 6-chome
Shinagawa-ku Tokyo 141 (JP)**
Inventor: **URABE, Tetsuo
Sony Corporation 7-35, Kitashinagawa 6-chome
Shinagawa-ku Tokyo 141 (JP)**

(74) Representative: **Cotter, Ivan John et al
D. YOUNG & CO. 10 Staple Inn
London WC1V 7RD (GB)**

(56) References cited:
**IBM Technical Disclosure Bulletin, vol. 20, no.
3, October 1977, page 1950**

**Applied Physics Letters, vol. 19, no. 7, October
1971, pages 241 to 242**

Courier Press, Leamington Spa, England.

## Description

This invention relates to liquid crystal display apparatus.

A previously proposed liquid crystal display apparatus which employs a liquid crystal display cell that is written to by heat from a laser beam is characterised in that a light scattering centre is formed by the laser beam irradiation. The theory thereof will now briefly be described with reference to a smectic liquid crystal. As its temperature rises, a smectic liquid crystal changes in phase in the following order: a crystal phase, a smectic C phase, a smectic A phase, a nematic phase and an isotropic phase. In use or operation, the temperature of the liquid crystal is set at a temperature between the temperature at which the phase transition from the smectic C phase to the smectic A phase occurs and the temperature at which the phase transition from the smectic A phase to the nematic phase occurs, namely at a temperature at which the smectic A phase is maintained. In the smectic A phase, the liquid crystal molecules exhibit a layer-like structure and the molecules in each layer are orientated in a direction normal (perpendicular) to the layer. If the liquid crystal molecules are placed on a glass substrate which is subjected to surface treatment in advance, the molecules will be arranged in layers perpendicular to the surface of the glass substrate. If a laser beam is focussed and irradiated on the liquid crystal layers arranged as described above, heat is generated in the portion thereof irradiated by the laser beam and the heat is conducted to the liquid crystal so that the temperature of the liquid crystal rises to exceed the smectic A-nematic phase transition temperature and, further, to exceed the nematic-isotropic phase transition temperature, whereby the liquid crystal is in the isotropic phase. If, in this state, the irradiation by the laser beam is stopped, the heated isotropic phase portion is cooled and, as a result, tends to return to the smectic A phase. However, if the heated portion of the liquid crystal is quenched (cooled rapidly), it is not returned to the initial state in which its molecules are aligned or orientated regularly. Instead, it stays in a condition of disordered orientation, whereby that portion is written to as a memory. If a voltage is applied to the liquid crystal cell which has been written to as described above, the dielectric constant in the long axis direction of the liquid crystal molecules being larger than that in the short axis direction, the liquid crystal molecules (arranged in the disordered state) are returned to the regular alignment of layers, thereby erasing the written information. That is, on the basis of such theory of operation, if the laser beam scans the liquid crystal and the intensity of the laser beam is modulated in synchronism therewith, writing and subsequent erasing of an image can be performed.

In the foregoing case, since the smectic-nematic phase transition or the nematic-isotropic phase transition is the primary phase transition, latent heat is required to cause the phase transition. Thus, some of the heat energy from the laser beam by which the liquid crystal is irradiated upon writing does not contribute to raising the temperature, which is a great obstacle to increasing the writing speed. Moreover, a sufficiently scattered state for keeping the written display as the memory must be achieved and, for that purpose, quenching is required. Thereafter, since the rise in temperature upon heating by the laser beam must be as large as possible, it is quite disadvantageous for any loss to occur in the heat energy brought about by the irradiation by the laser beam.

The use of the scattered state as the written state makes it difficult to increase the contrast. That is, if, in order to solve the above-mentioned problem, a laser absorbing layer (for example of aluminium) is formed on the liquid crystal cell for the purpose of converting the light energy of the irradiated laser beam into heat energy to the maximum extent possible, the light absorbing efficiency is increased to thereby increase the writing efficiency and the display system becomes of the reflective type, so that a high contrast cannot be obtained as is the case for display system of the transparent (transmitting) type.

In order to make the display system of the liquid crystal cell of the transparent type, it would be possible to use a transparent conductive film, for example of indium oxide-tin oxide, as the laser absorbing layer, or to mix a colouring matter or dye, which can absorb the laser beam, into the liquid crystal. Either of these methods presents a limit to the asorption of the laser beam so that several difficult problems remain to be solved for the purpose of raising the temperature of the liquid crystal satisfactorily.

An article by A. N. Nesrullaev et al entitled "Thermooptic data storage in the chiral ferroeletric smectic C* phase of liquid crystals", which appears in Sov. J. Quantum Electron., 10(12), Dec. 1980, pages 1505—1507, discloses a liquid crystal data storage arrangement in which a laser beam is used to locally heat a chiral smectic C phase liquid crystal to such an extent that it passes through the smectic A phase and enters the isotropic phase, such heating being followed by rapid cooling to produce an image of a test object in the liquid crystal. The image can be erased by the application of a DC voltage.

European Patent Application Publication No. EP—A—0 032 362 discloses a liquid crystal display apparatus comprising:

a liquid crystal cell having a pair of opposed substrates and a chiral smectic C phase liquid crystal disposed between the substrates, the gap between the substrates being sufficiently thin that the helical configuration of the chiral smectic C phase is suppressed; and

means for applying a DC electric field to the liquid crystal such that the molecules thereof can

be switched bistably between first and second orientations in which the molecules have equivalent energy but opposite dipole moments.

The present invention provides a liquid crystal display apparatus as just set forth, characterised in that:

means is provided for irradiating a portion of the liquid crystal with an energy beam so as to raise the temperature of said portion such that it adopts the smectic A phase, in which the molecules have a third orientation; and

the field applying means is operative to apply the field, the magnitude of which is sufficiently low as not to enable switching between the first and second orientations of the molecules in the chiral smectic C phase, while, after cessation of the irradiation, said portion coils to below the smectic A-chiral smectic C phase transition temperature, such that the molecules within said portion change from the third orientation to a selected one of the first and second orientations whereas the molecules outside of said portion remain in that one of the first and second orientations in which they were in prior to irradiation.

As explained below, such an apparatus enables a significant improvement of writing speed and also can be embodied as to enable a high contrast display to be provided.

The invention will now be further described, by way of illustrative and non-limiting example, with reference to the accompanying drawings, in which:

Figure 1 is a cross-sectional view of a layer-like structure of a smectic C phase liquid crystal;

Figure 2 is a graph showing a relationship between the orientation of the molecules of a smectic phase liquid crystal and temperature;

Figure 3 is a cross-section view of a layer structure of a chiral smectic C phase (smectic C* phase) together with an explanatory view illustrating the direction of molecular dipole moments;

Figure 4 is a cross-sectional view of an example of liquid crystal display cell used in a liquid crystal display apparatus embodying the invention;

Figure 5 is a plan view of the cell of Figure 4 showing the arrangement (orientation) of the liquid crystal molecules;

Figure 6 shows an example of a liquid crystal display apparatus embodying the invention;

Figure 7 is a plan view showing a portion of the liquid crystal molecules irradiated by a laser beam; and

Figure 8 is a plan view of the liquid crystal molecules after writing to the cell.

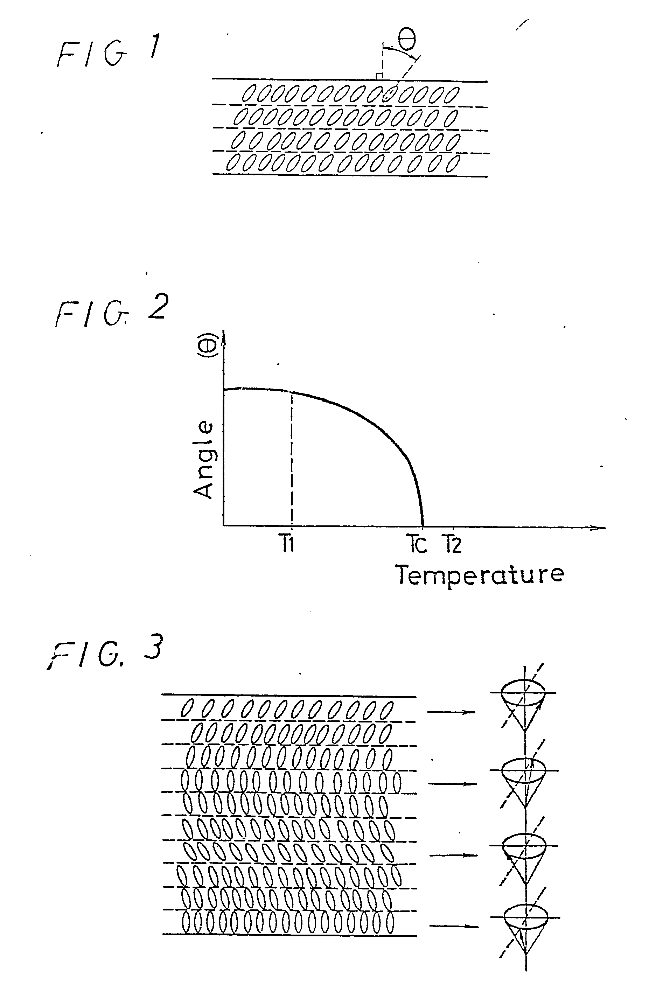

A liquid crystal display apparatus embodying the invention will now be described in detail. The embodiment employs liquid crystal molecules that form a smectic liquid crystal which is in the smectic C phase. The smectic C phase has a layer structure common to the smectic phases. While the long axes of the molecules in the layers of the smectic A phase are normal (perpendicular) to the layers, the smectic C phase is characterised by the long axes of the molecules being inclined from the normal to the layers by an angle $\theta$, as is shown in Figure 1. The angle $\theta$ is dependent on temperature. That is, as shown in Figure 2, as the temperature of the smectic C phase rises the angle $\theta$ thereof approaches zero and becomes zero at a centre temperature Tc. Since the state where the angle $\theta$ equals zero is the smectic A phase, the temperature Tc is the phase transition temperature at which the smectic C phase changes to the smectic A phase.

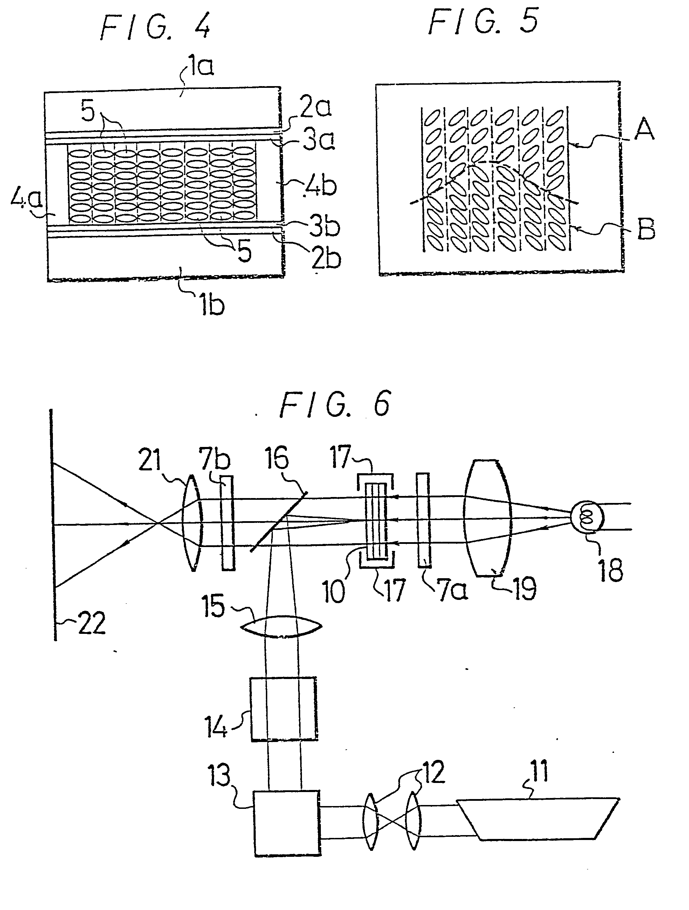

It is known that the smectic C phase can be changed to a chiral smectic C phase (SmC*) by introducing an optical activity centre thereto: the material, in this state, exhibits ferroelectricity. The chiral smectic C phase is characterised by a helical structure in which, as shown in Figure 3, the long axis of each of the liquid crystal molecules in the respective layers is inclined by a certain angle $\theta$ from the normal to the layers in the same way as in the respective layers of the smectic C phase, but the liquid crystal molecules in adjacent layers are rotated with respect to one another with the normal to the layers being the axis of rotation. Thus, as shown in Figure 3, the dipole moment of each molecule is perpendicular to the plane formed by the long axis of the molecule and the normal, and is in the direction of the short axis of the molecule. Examples of liquid crystals having such a chiral smectic C phase are p-decyloxy-benzylidene-p'-amino-2-methyl   butyl cinnamate (DOBAMBC) and p-hexyloxy-benzylidene-p'-amino-2   chloropropyl   cinnamate (HOBACPC).

A liquid crystal display cell formed of the above-mentioned liquid crystal, which can be used in the liquid crystal apparatus embodying this invention, can be constructed as shown in Figure 4. This liquid crystal display cell comprises, for example, transparent electrodes 2a and 2b provided on surfaces of glass substrates 1a and 1b, respectively, horizontal orientation layers 3a and 3b (obtained by spin coating of polyvinyl alcohol, for example, without rubbing) provided on the transparent electrodes 2a and 2b, respectively, the horizontal orientation layers being disposed to face each other and being separated by a gap of approximately several micrometres, spacers 4a and 4b disposed at respective ends of the glass substrates to form a space, and a liquid crsytal (for example DOBAMBC) sealed within such space. The liquid crystal comprises layers 5.

The liquid crystal display cell formed as described above cannot have the helical structure shown in Figure 3, even within the temperature range of the chiral smectic C phase (smectic C* phase), but has a structure as shown in Figure 4. The reason for this is that, since the cell is of low thickness, a strong array restriction force on the glass surface acts strongly to prevent the liquid crystal molecules from adopting the helical structure.

As shown in Figure 5, the liquid crystal can adopt two different parallel orientations or alignments, shown at A and B respectively, with respect to the glass surfaces. The two orientations A and B appear as domains which are equivalent in energy, but of which the directions of the dipole moments of the molecules are opposite to each other. Accordingly, if a DC voltage is applied thereto to change the polarity thereof, either of the two orientations can be selected so that a bistable switching operation is possible.

In the liquid crystal display apparatus embodying the invention which includes the liquid crystal display cell having the structure as described above, other parts than the liquid crystal display cell are the same as those of known liquid crystal display apparatus.

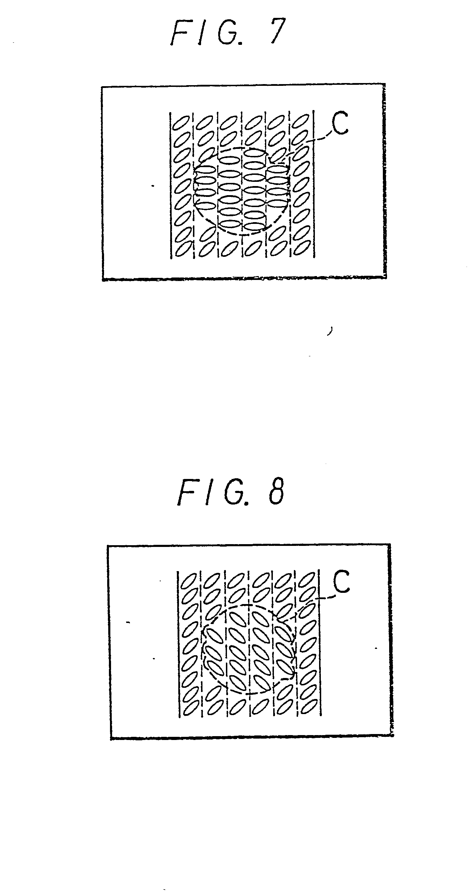

Figure 6 shows an example of the liquid crystal display apparatus applied to a light display arrangement. The manner in which writing to the display cell of the apparatus is performed will now be explained. A laser beam emitted from a laser beam source 11, such as a GaAs laser, is directed through a beam expander 12 to a modulator 13 and then focussed at a predetermined position of a liquid crystal display cell or element 10 (constructed as described above) via an X—Y galvanomirror 14, a converging lens 15 and a half mirror 16. Part of the laser beam is absorbed by the transparent electrodes 2a and 2b of the liquid crystal display cell 10 and converted to heat, which is then conducted to the liquid crystal layers 5 to raise the temperature at that portion. The temperature of the liquid crystal layers 5 is initially set by a heater 17 at a temperature T1 (Figure 2) at which the liquid crystal molecules are maintained in the chiral smectic C phase. Then, the portion of the liquid crystal layers 5 irradiated by the laser beam is heated to a temperature at which the angle θ is reduced to zero, namely, to a temperature T2 higher than the chiral smectic C-smectic A phase transition temperature Tc. The temperature T1 is preferably set at a value lower than the temperature Tc by about 2 to 10 degrees C. The state of the liquid crystal molecules in that case, as shown in Figure 7, is such that the laser beam irradiated portion C is in the smectic A phase. If irradiation by the laser beam is then stopped, the smectic A phase portion is cooled and returns to the smectic C* phase again. In this case, if a weak DC electric field is applied to the cell in its thickness direction, as shown in Figure 5, the polarity thereof can selectively be determined to be either of the orientations A and B, whereby writing to the cell can be effected. In the orientation A the dipole moments of the liquid crystal molecules are in the upward direction, while in the orientation B the dipole moments of the liquid crystal molecules are in the downward direction. The applied voltage must be sufficiently low that it cannot switch the molecules between the orientations A and B at the temperature T1. The arrangement of the liquid crystal molecules on which writing has been performed as described above is shown in Figure 8.

If, as shown in Figure 6, the liquid crystal cell 10 (written to as described above) is sandwiched between a polariser 7a and an analyser 7b, a contrast can be established between the written portion and the non-written portion. If the polariser 7a is disposed in the long axis direction of the molecules in the erased state and the analyser 7b is disposed perpendicular thereto, light which is emitted from a light source 18, passed through a condenser 19 and the polariser 7a and then is incident on the liquid crystal display cell 10, is passed through the cell 10 with the linearly polarised light unchanged and interrupted by the analyser 7b so as to be dark. On the other hand, since in the written portion of the liquid crystal the long axis direction of the liquid crystal molecules and the polarising direction of the polariser 7a are not coincident with each other, the light is affected by double refraction in the cell 10. Thus, when emerging from the cell 10, it becomes elliptically polarised light so that part of the light is transmitted through the analyser 7b and projected through a lens 21 onto a display screen 22 to be readable.

Since the above-described liquid crystal display apparatus embodying the invention is unlike a previously proposed method employing for display a focal conic texture formed by using a phase transition such as the smectic A-isotropic and colesteric-isotropic or the like and quenching thereof, but employs the smectic C*-smectic A phase transition, no latent heat is required and, further, quenching over a large temperature drop is not necessary so that such a large rise of the temperature is not required, thereby enabling a large increase of the writing speed to be achieved.

Furthermore, since the display method of the liquid crystal display embodying the invention is similar to that of a TN liquid crystal display cell, a high contrast can be obtained by a simple optical system. Furthermore, absorption of the laser beam can be carried out by mixing a colouring matter or dye, which has a maximum wavelength in the vicinity of the laser oscillation wavelength, into the liquid crystal layers.

**Claims**

1. A liquid crystal display apparatus comprising:

a liquid crystal cell (10) having a pair of opposed substrates (1a, 1b) and a chiral smectic C phase liquid crystal disposed between the substrates, the gap between the substrates being sufficiently thin that the helical configuration of the chiral smectic C phase is suppressed; and

means for applying a DC electric field to the liquid crystal such that the molecules thereof can be switched bistably between first and second orientations (A, B) in which the molecules have equivalent energy but opposite dipole moments; characterised in that:

means (11 to 16) is provided for irradiating a portion of the liquid crystal with an energy beam so as to raise the temperature of said portion such that it adopts the smectic A phase, in which the molecules have a third orientation; and

the field applying means is operative to apply the field, the magnitude of which is sufficiently low as not to enable switching between the first and second orientations of the molecules in the chiral smectic C phase, while, after cessation of the irradiation, said portion cools to below the smectic A-chiral smectic C phase transition temperature, such that the molecules within said portion change from the third orientation to a selected one of the first and second orientations (A, B) whereas the molecules outside of said portion remain in that one of the first and second orientations in which they were in prior to irradiation.

2. Apparatus according to claim 1, wherein the irradiating means (11 to 16) comprises a laser beam source (11).

3. Apparatus according to claim 2, wherein the laser beam source (11) is a GaAs laser.

4. Apparatus according to claim 2 or claim 3, wherein a colouring matter or dye, which has a maximum absorption wavelength in the vicinity of the laser oscillation wavelength, is mixed in the liquid crystal.

5. Apparatus according to any one of the preceding claims, wherein the cell (10) is transparent, the apparatus including a display screen (22), a light source (18) positioned to direct light through the cell (10) towards the screen (22), a polariser (7a) disposed between the light source (18) and the cell (10), and an analyser (7b) disposed between the cell (10) and the screen (22), the polariser (7a) and analyser (7b) being so orientated that light from the light source (18) is not transmitted to the screen (22) if the molecules of the liquid crystal are in a predetermined one of said first and second orientations (A, B) but is transmitted to the screen if the molecules are in the other of the first and second orientations.

## Patentansprüche

1. Flüssigkristallanzeigevorrichtung,

mit einer Flüssigkristallzelle (10), das ein Paar von einander gegenüberliegenden Substraten (1a, 1b) und einen zwischen diesen Substraten angeordneten Flüssigkristall mit einer chiralen smektischen C-Phase enthält,

wobei der Zwischenraum zwischen den Substraten genügend dünn ist, so daß die helikale Konfiguration der chiralen smektischen C-Phase unterdrückt wird; und

mit einer Einrichtung zum Anlegen eines elektrischen Gleichfeldes an den Flüssigkristall in der Art, daß dessen Moleküle bistabil zwischen ersten und zweiten Orientierungen (A, B), in denen die Moleküle äquivalente Energie aber entgegengestezte Dipolemomente aufweisen, umgeschaltet werden können, gekennzeichnet

durch eine Einrichtung (11 bis 16) zum Bestrahlen eines Bereichs des Flüssigkristalls mit einem Energiestrahl zur Erhöhung der Temperatur dieses Bereichs, so daß dieser die smektische A-Phase annimmt, in der die Moleküle eine dritte Orientierung aufweisen; und

dadurch, daß die Einrichtung zum Anlegen des Feldes so betreibbar ist, daß das Feld, dessen Größe hinreichend niedrig ist, um eine Umschaltung zwischen der ersten und der zweiten Orientierung der Moleküle in der chiralen smektischen C-Phase zu vermeiden, nach Wegfall der Bestrahlung angelegt wird, wobei sich dieser Bereich auf unterhalb der smektischen A- chiralen smektischen C-Phasen-Übergangstemperatur abkühlt, derart, daß sich die Moleküle innerhalb dieses Bereichs aus der dritten Orientierung zu einer aus den ersten oder zweiten Orientierungen (A, B) ausgewählten Orientierung umformen, wohingegen die Moleküle außerhalb dieses Bereichs in derjenigen von erster und zweiter Orientierung verbleiben, in der sie sich vor der Bestrahlung befanden.

2. Vorrichtung gemäß Anspruch 1, bei der die Bestrahlungs-Einrichtung (11 bis 16) eine Laserstrahlenquelle (11) aufweist.

3. Vorrichtung gemäß Anspruch 2, bei der die Laserstrahlenquelle (11) ein GaAs-Laser ist.

4. Vorrichtung gemäß Anspruch 2 oder Anspruch 3, bei der ein Färbemittel oder Farbstoff mit einer maximalen Absorptionswellenlänge in der Nähe der Laser-Oscillationswellenlänge in den Flüssigkristall gemischt ist.

5. Vorrichtung gemäß einem beliebigen der vorhergehenden Ansprüche, bei der die Zelle (10) transparent ist, beibei die Vorrichtung enthält

—einen Anzeigeschirm (22),

—eine Lichtquelle (18), die so angeordnet ist, daß sie Licht durch die Zelle (10) auf den Schirm (22) lenkt,

—ein Polarisator (7a), der zwischen der Lichtquelle (18) und der Zelle (10) angeordnet ist, und

—einen Analysator (7b), der zwischen der Zelle (10) und dem Schirm (22) angeordnet ist,

wobei der Polarisator (7a) und der Analysator (7b) so orientiert sind, daß kein Licht von der Lichtquelle (18) auf den Schirm (22) durchgelassen wird, wenn sich die Moleküle des Flüssigkristalls in einer vorbestimmten von erster und zweiter Orientierung (A, B) befinden, daß das Licht auf den Schirm jedoch durchgelassen wird, wenn die Moleküle sich in der anderen von erster und zweiter Orientierung befinden.

## Revendications

1. Appareil d'affichage à cristal liquide comprenant:

une cellule à cristal liquide (10) possèdant une paire de substrats opposés (1a, 1b) et un cristal liquide à phase smectique C chirale disposé entre les substrats, l'intervalle séparant les substrats étant suffisamment mince pour que la configuration en hélice de la phase smectique C chirale soit supprimée; et

un moyen servant à appliquer un champ électrique continu au cristal liquide de façon que ses molécules puissent être commutées de manière bistable entre une première et une deuxième orientation (A, B) dans lesquelles les molécules ont une énergie équivalente, mais des moments dipolaires différents; caractérisé en ce que:

un moyen (11 à 16) est prévu pour irradier une partie du cristal liquide à l'aide d'un faisceau énergétique afin d'élever la température de ladite partie de façon qu'elle adopte la phase smectique A, dans laquelle les molécules possèdent une troisième orientation; et

le moyen d'application de champ a pour fonction d'appliquer un champ dont l'amplitude est suffisamment basse pour ne pas autoriser la commutation entre les première et deuxième orientations des molécules dans la phase smectique C chirale, tandis que, après cessation de l'irradiation, ladite partie se refroidit jusqu'au dessous de la température de transition de phase smectique A-smectique C chirale, de sorte que les molécules se trouvant à l'intérieur de ladite partie passent de la troisième orientation à l'une, sélectionnée, des première et deuxième orientations (A, B) dans le même temps que les molécules placées à l'extérieur de ladite partie restent dans celle des première et deuxième orientations dans laquelle elles se trouvaient avant l'irradiation.

2. Appareil selon la revendication 1, où le moyen d'irradiation (11 à 16) comprend une source de faisceau laser (11).

3. Appareil selon la revendication 2, où la source de faisceau laser (11) est un laser à GaAs.

4. Appareil selon la revendication 2 ou 3, où un colorant, qui possède une longueur d'onde d'absorption maximale au voisinage de la longueur d'onde d'oscillation du laser, est mélange au cristal liquide.

5. Appareil selon l'une quelconque des revendications précédentes, où la cellule (10) est transparente, l'appareil comportant un écran d'affichage (22), une source lumineuse (18) placée de manière à diriger la lumière au travers de la cellule (10) en direction de l'éran (22), un polariseur (7a) disposé entre la source lumineuse (18) et la cellule (10), et un analyseur (7b) disposé entre la cellule (10) et l'écran (22), le polariseur (7a) et l'analyseur (7b) étant ainsi orientés que la lumière qui vient de la source lumineuse (18) n'est pas transmise à l'écran (22) si les molécules du cristal liquide se trouvent dans l'une, prédéterminée, desdites première et deuxième orientations (A, B), mais est transmise à l'écran si les molécules se trouvent dans l'autre des première et deuxième orientations.

FIG 1

FIG. 2

FIG. 3

1

# FIG. 4

# FIG. 5

# FIG. 6

FIG. 7

C

FIG. 8

C